# EUROPEAN PATENT SPECIFICATION

(11) **EP 1 164 708 B1**
(45) Date of publication and mention of the grant of the patent: **24.08.2005**
(21) Application number: 01111284.4
(22) Date of filing: 16.05.2001
(51) Int. Cl.: H04B 1/38, G07C 9/00, B60R 25/00

(54) **Long range two way low power communication device**
Zweiweg Kommunikationsgerät mit grosser Reichweite und niedriger Leistung
Dispositif de communication bidirectionnelle pour longue distance, de puissance faible

(30) Priority: 01.06.2000 US 585212
(43) Date of publication of application: 19.12.2001
(73) Proprietor: TRW Automotive U.S. LLC, Michigan 48150 (US)
(72) Inventor: Fischer, Gerald R., Playa Del Rey, CA 90293 (US); Allen, Barry R., Redondo Beach, CA 90277 (US); Dunbridge, Barry, Torrance, CA 90505 (US); McIver, George W., Redondo Beach, CA 90277 (US)
(74) Representative: Schmidt, Steffen J.

(56) References cited:
- EP-A- 0 934 857
- EP-A- 1 096 454
- WO-A-99/31817
- US-A- 4 825 448
- US-A- 5 442 553

## Description

### MICROFICHE APPENDIX

This disclosure includes a microfiche appendix of 1 microfiche consisting of a total number of 54 frames.

### BACKGROUND OF THE INVENTION

The present invention relates to a communications device. More specifically, the present invention relates to a bi-directional communications implementation that may be used to communicate over relatively long distances at low power, for example, in a remote keyless entry system for cars, trucks, and other vehicles.

The European Patent Application EP 1 096 454 A2 (filed on 17 October 2000 claiming the priority date 27 October 1999 of US 428083 and published on 2 May 2001 in Bulletin 2001/18) discloses an automatic meter transponder system for providing communications between an interrogator transceiver and a plurality of meter transceivers. In this automatic meter transponder system, each of the meter transceivers is mounted on a separate meter and the interrogator transceiver transmits meter data to be received by the interrogator transceiver.

The automotive industry has for many years turned to the skills of electronics designers, including the Automotive Electronics Group at TRW Inc. for remote keyless entry devices ("RKEs"). The RKEs common to everyday experience are often designed as smallish plastic enclosures (small enough to fit in a pocket or on a keychain) that incorporate electronics for transmitting command signals from the RKE to a vehicle. The RKE includes a set of control buttons which, when activated, cause the RKE to transmit the command signals to the vehicle. The command signals that the RKE sends depend on the control button pressed and may, for example, instruct the vehicle to perform tasks ranging from locking the doors to activating an alarm. In the past, however, RKEs were limited in several significant ways.

A first significant limitation was the uni-directional only operation of previous RKEs. In other words, past RKEs were only able to transmit from the RKE to the vehicle and thus were unable to obtain feedback of any sort from the vehicle. As an example, the RKE could not receive a transmission from the vehicle indicating that the doors were locked in response to a previously transmitted RKE control signal. Thus, in the past, RKE users typically had to rely on an imperfect sense of hearing to determine whether the vehicle actually locked its doors in response to a lock door command signal. Activating the RKE in a noisy environment or beyond the range over which audible mechanical locking sounds might be heard meant that the RKE user could not be certain that the vehicle had actually locked its doors.

Furthermore, the absence of bi-directional communication meant that previous RKEs could not provide a mechanism by which a user could activate the RKE to query the vehicle for its status. As a result, it was not possible, for example, to check the vehicle status to determine if it had been broken into (for example by checking sensors to determine a window had been smashed). As further examples, the RKE could not query the vehicle to determine whether the doors were locked, the trunk was locked, or the interior lights were on.

A second significant limitation of previous RKEs was their relatively short range. Thus, the RKE could not be used beyond a particular range with any certainty that the command signals sent by the RKE would be received by the vehicle. Thus, in conjunction with, for example, an imperfect sense of hearing, it was not always possible to determine whether the car had locked its doors in response to a lock door command signal. Furthermore, even had previous RKEs been able to query the status of the vehicle, the range limitations inherent with the RKEs limited the usefulness of the query in many instances.

For example, querying the status of the car to determine if it had been broken into would preferably be accomplished as far away from the vehicle as possible. A related query to determine whether there was an actual intruder still present in the car would similarly be accomplished as far away from the vehicle as possible. As another example, in some instances it would be preferable to activate the vehicle's engine or climate control from a greater distance than the relatively short range provided by previous RKEs. A greater activation range may then allow the engine to warm up or allow the vehicle to achieve comfortable climate settings before the user arrived at the vehicle.

A need has long existed in the industry for a long range bi-directional handheld communications device with applications including remote keyless entry.

### BRIEF SUMMARY OF THE INVENTION

It is an object of the present invention to provide a bi-directional communication device.

It is another object of the present invention to provide a bi-directional communication device with extended range.

It is a further object of the present invention to provide a bi-directional communication device that includes a wakeup detector.

Yet another object of the present invention is to reduce the power required to implement a communications system including a bi-directional communication device by allowing a microprocessor to remain in sleep mode until needed.

Another object of the present invention is to provide a bi-directional communication device that includes a snapshot recorder for storing signal samples for further processing.

Yet another object of the present invention is to provide a communications system including a bi-direction communication device with microprocessor based frequency, phase, and time resolution.

It is a further object of the present invention to provide microprocessor based demodulation, bit detection, and decryption in a communications system using a bi-directional communication device.

One or more of the foregoing objects is met in whole or in part by the present communications device. The device includes an antenna for transmitting and receiving signals, an analog section coupled to the antenna, and a digital section coupled to the analog section. More specifically, the analog section includes an intermediate frequency downconverter, a digital Inphase output, and a digital Quadrature phase output. The digital section includes an I/Q derotater producing an I output and a Q output, a wakeup detector including a magnitude output, and a threshold comparison circuit coupled to the magnitude output. The threshold comparison circuit stores a threshold value indicative of a wakeup signal reception condition, as reflected in the magnitude output.

The wakeup detector may also, for example, use an accumulator and a moving average circuit between the magnitude output and the threshold comparison circuit. The magnitude output itself is typically generated using a magnitude circuit that preferably outputs a magnitude approximation formed by the greater of two inputs plus one half the smaller of the two inputs. The two inputs may be, for example, derotated I/Q data, inner/outer products of I/Q data, or correlated inner/outer products. In one implementation of the communication device, the digital section includes an inner/outer product circuit coupled to the I output and the Q output, and I and Q accumulators for the inner and outer products. Correlators for the inner and outer products may also be included (particularly if modulated wakeup signals are expected).

A snapshot memory is preferably provided and coupled to the I accumulator and the Q accumulator. The frequency of the incoming wakeup signal may be determined, as explained in more detail below, by later processing the saved samples. A larger snapshot recorder is also included and is used to store the I output and the Q output produced by the derotater. The stored I and Q outputs may then be subsequently processed to determine frequency and information content.

The analog section typically uses an Inphase analog to digital converter coupled to the intermediate frequency downconverter to produce the digital Inphase output. Similarly, a Quadrature phase analog to digital converter is coupled to the intermediate frequency downconverter and produces the digital Quadrature phase output. The analog to digital converters are preferably 1-bit analog to digital converters.

### BRIEF DESCRIPTION OF THE DRAWINGS

Figure 1 illustrates a block diagram of a long range bi-directional communication device.
Figure 2 shows a schematic representation of a radio frequency and intermediate frequency portion of a long range bi-directional communication device including receiver and transmitter signal processing.
Figure 3 illustrates a block diagram of a digital processing section of a long range bi-directional communication device.
Figure 4 shows an example of correlator circuitry used to detect an FSK wakeup signal.
Figure 5 illustrates another example of an FSK wakeup signal detector.
Figure 6 shows a high level flow diagram of a method for waking up a communication device.

### DETAILED DESCRIPTION OF THE INVENTION

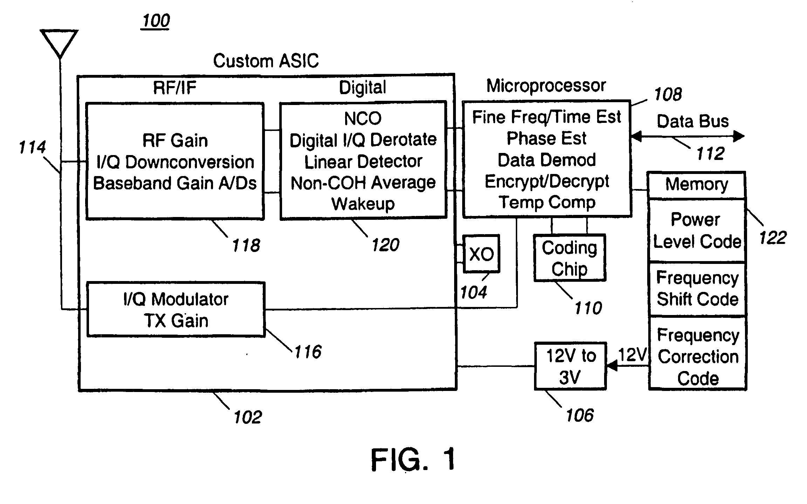

Turning now to Figure 1, that figure shows a communications system 100 including a long range bi-directional communication device 102 ("BCD 102") shown implemented in a single Application Specific Integrated Circuit (ASIC), a crystal oscillator 104, a DC to DC converter 106 and a microprocessor 108. The crystal oscillator 104 provides the clock frequency used by the BCD 102 for analog signal processing and to generate internal clocks for digital control. The BCD 102 receives power from the DC to DC converter 106 which, in one embodiment, reduces a +12V DC input to a +3V DC output.

The microprocessor 108 is connected to the BCD 102 for processing which will be explained in detail below. The microprocessor 108 may also be connected to support circuitry, including, for example, a coding/decoding chip 110. The coding/decoding chip 110 may implement computationally intensive operations such as signal error coding and decoding, encryption and decryption, and the like. Alternatively, the coding/decoding chip 110 may be omitted and the necessary functions implemented in software stored in the memory 122 and executed by the microprocessor 108. The microprocessor 108 supports a general purpose data bus 112, which may be used to communicated with external memory, I/O devices, and the like. Finally, a transmit and receive antenna 114 is included and connected to the BCD 102.

The BCD 102 may, for example, be implemented in a single Application Specific Integrated Circuit (ASIC). Alternatively, the analog section and digital sections (described below) may be broken into separate ASICs, or both sections may be implemented with discrete circuitry. As will be explained in more detail below, the BCD 102 may alert the microprocessor 108 when incoming communications are detected.

The communication system 100 shown in Figure 1 may be integrated into a vehicle, for example. The data bus 112 may then be connected to the general purpose data bus routed around to the electronics in the vehicle, including the door locks, trunk lock, security system and the like. Similarly, an associated RKE may incorporate its own communications system 100 to transmit and receive signals to and from the vehicle. The data bus 112 in the RKE may be connected to a switch matrix, for example, providing actuable buttons for instructing the vehicle to perform various tasks including locking/unlocking doors, activating alarms, and starting the engine.

Referring again to Figure 1, the BCD 102 includes a number of individual signal processing blocks (described in detail below). The signal processing blocks may generally be segmented between RF/IF (analog) processing functions 116, 118 and digital processing functions 120. Included in the RF/IF processing functions 118 for the transmit direction are an I/Q upconversion and transmitter gain. The RF/IF processing functions 116 for the receive direction include receiver gain, I/Q downconversion, baseband gain, and analog to digital conversion. The digital processing functions 120 include a numerically controlled oscillator (NCO) driven digital I/Q derotator, a wakeup detector and a snapshot recorder.

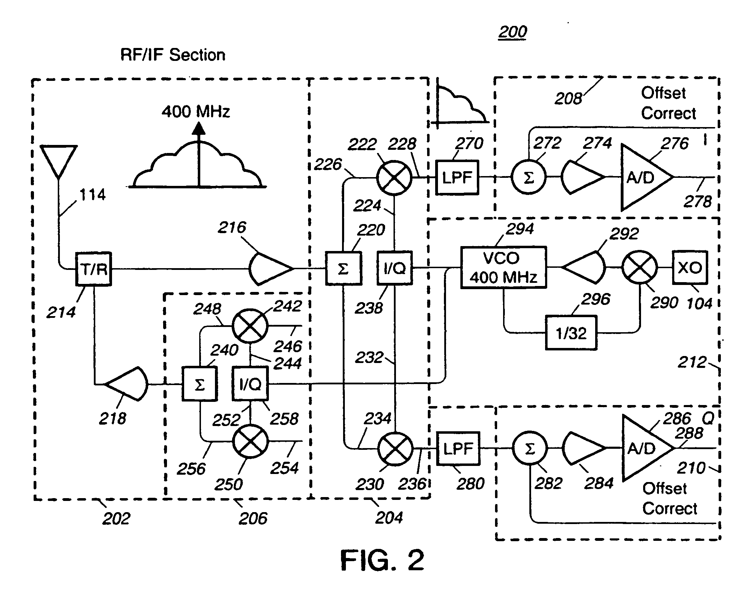

Turning now to Figure 2, that figure shows a detailed diagram 200 of the RF/IF processing functions 116 and 118 in the analog section. The RF/IF processing functions are divided into six blocks in Figure 2: the transmit/receive block 202, the analog I/Q downconverter block 204, the analog I/Q upconverter block 206, the I analog to digital converter block 208, the Q analog to digital converter block 210, and the frequency source block 212. Each of the blocks is discussed in detail below.

The transmit/receive block 202 includes the antenna 114, the transmit/receive switch 214, the receive amplifier 216, and the transmit amplifier 218. The antenna 114 captures or sends electromagnetic signals generated by or processed by the BCD 102. Typical transmit and receive frequencies are in the 300-500 MHz range. The transmit/receive switch 214 controls whether the BCD 102 is driving the antenna 114 or reading signals captured by the antenna 114. The transmit/receive switch 214 may be implemented, for example, as an analog multiplexer or other switching element (for example, a relay). Alternatively, buffers with output disable control may be used to isolate the transmit path from the receive path. The receive amplifier 216 serves to boost the signal captured by the antenna 114 for further processing in the analog I/Q downconverter block 204, while the transmit amplifier 218 serves to boost the signal produced by the I/Q upconverter block 206 and applied to the antenna 114.

The transmit amplifier 218 may be intelligently controlled by the microprocessor 108 to change its output based on manufacturing tolerances, FCC limits, and the like. For example, during manufacturing, sample lots of the communication devices 100 may be tested, and an appropriate power level code supplied in the memory 122 connected to the microprocessor 108. Each communication device 100 may then operate the transmit amplifier 218 at a preferred level.

The I/Q downconverter block 204 includes a signal splitter 220, a downconverter I mixer 222 with an downconverter I mixer oscillator input 224, an downconverter I mixer signal input 226, and an analog downconverted I output 228. The I/Q downconverter block 204 also includes an downconverter Q mixer 230 with an downconverter Q mixer oscillator input 232, an downconverter Q mixer signal input 234, and an analog downconverted Q output 236. An oscillator phase shifter 238 is also provided.

The structure of the I/Q upconverter block 206 is similar to that of the I/Q downconverter block 204 The upconverter block 206 includes a signal summer 240, an upconverter I mixer 242 with an upconverter I mixer oscillator input 244, an upconverter I mixer signal input 246, and an analog upconverted I output 248. The I/Q upconverter block 206 also includes an upconverter Q mixer 250 with an upconverter Q mixer oscillator input 252, an upconverter Q mixer signal input 254, and an analog upconverted Q output 256. An oscillator phase shifter 258 is also provided.

An analog I low pass filter 270 connects the analog downconverted I output to the I analog to digital converter block 208. The I analog to digital converter block 208 itself includes a summer 272, an amplifier 274, and an I analog to digital converter 276 which produces a digital I output 278. Similarly, an analog Q low pass filter 280 connects the analog downconverted Q output to the Q analog to digital converter block 210. The Q analog to digital converter block 210 includes a summer 282, an amplifier 284, and an analog to digital converter 286 which produces a digital Q output 288.

The frequency source block 212 includes the crystal oscillator 104, and a frequency multiplier. The frequency multiplier uses a phase locked loop including a phase detector 290, amplifier 292, voltage controlled oscillator (VCO) 294. A divider 296 closes the loop between the VCO 294 and phase detector 290. In operation, the crystal oscillator 104 produces an output signal at a relatively low frequency, for example 12.5 MHz. The phase detector 290 produces a difference signal representing the difference in frequency or phase between the output of the crystal oscillator 104 and the divided down output of the VCO 294 as selected by the divider 296. In this example, division is set to 32, though other integer and non-integer values may also be used. The difference signal is amplified and applied to the VCO to control its output. The frequency multiplier shown in the frequency source block 212 thus generates an output signal with a frequency 32 times greater than the crystal oscillator 104 (i.e., 400 MHz).

Next, the operation of the RF/IF processing components shown in Figure 2 will be described in more detail in the receive direction and the transmit direction. In the receive direction, the transmit/receive switch 214 allows received signals captured by the antenna 114 to flow through the amplifier 216 and reach the splitter 220. The splitter 220 connects identical copies of the received signal to the downconverter I mixer 222 and the downconverter Q mixer 230. The downconverter I mixer oscillator input receives the output of the VCO 294, while the downconverter Q mixer oscillator input receives the output of the VCO 294 shifted by 90 degrees (by the oscillator phase shifter 238).

The frequency content of the received signals are thereby shifted by the mixers 222 and 230 to a difference frequency (the frequencies in the received signals - the VCO 294 frequency) and a sum frequency (the frequencies in the received signals plus the VCO 294 frequency). The mixers 222 and 230 thus produce the I and Q components of the received signals, that when filtered by the I and Q low pass filters 270 and 280 produce analog downconverted I and Q signals at an intermediate frequency. For example, if the frequency content of the received signals is centered around 399.9 MHz and the VCO 294 output is 400.0 MHz, then the difference frequency is 100 KHz (the intermediate frequency), and the sum frequency is 799.9 MHz. The I and Q low pass filters 270 and 280 remove the sum frequency. Preferably, the intermediate frequency is offset from DC by a small amount (e.g., 100-200 KHz or more) to prevent DC offsets in the processing components from interfering with the downconverted received signals. Optionally, the I and Q low pass filters 270 and 280 may be replaced with band pass filters with a pass band centered around the intermediate frequency and a bandwidth corresponding to the bandwidth of the signals transmitted and received. Using band pass filters provides the benefit of immediately eliminating DC offsets in the signals.

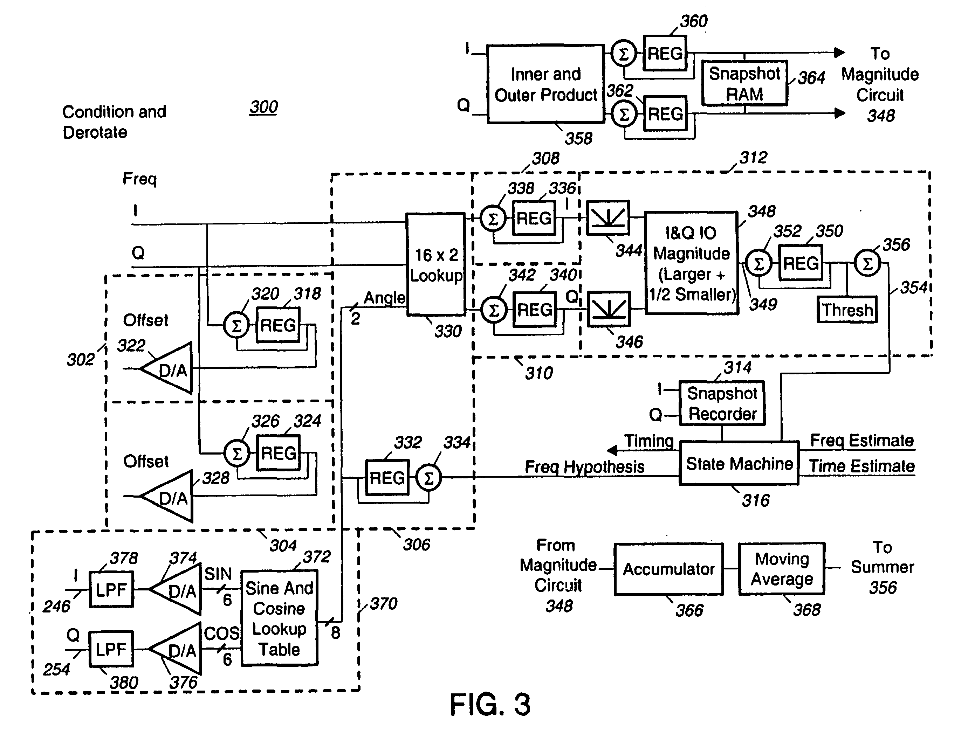

The downconverted I and Q outputs of the I and Q low pass filters 270 and 280 are adjusted by the summers 272 and 282 to remove DC offsets (explained in more detail with reference to Figure 3, below), amplified by amplifiers 274 and 284, and converted to digital representation on the digital I and Q outputs 278 and 288 by the I and Q analog to digital converters 276 and 286. The I and Q analog to digital converters are preferably 1-bit analog to digital converters, although multi-bit converters are also suitable (as noted below).

In the transmit direction, the BCD 102 operates on I and Q components generated according to a modulation scheme used by the microprocessor 108, for example BPSK or QPSK. The upconverter I and Q mixers 242 and 250 generate two components of the signal to be transmitted. The upconverter I mixer signal input accepts the I component (first converted to analog form) and in conjunction with the VCO 294 output (connected to the upconverter I oscillator input 244) produces one component of the signal to be transmitted. The upconverter Q mixer signal input accepts the Q component (first converted to analog form) and in conjunction with the VCO 294 output, shifted by 90 degrees by the shifter 258 and connected to the upconverter Q oscillator input 252, produces the second component of the signal to be transmitted. The two components are added by the adder 240, boosted by the amplifier 218, and driven through the antenna 114.

It is noted that the combination of the frequency synthesizer 370 (described below) and the VCO 294 output may be adjusted to produce a frequency used for transmission that is different than the frequency used for reception. As an example, the VCO 294 frequency, during reception, may be set to approximately 100 KHz greater than the expected received signal center frequency (which may be, for example, 399.9 MHz). During transmission, the VCO 294 and frequency synthesizer 370 may be set instead to generate the 399.9 MHz center frequency. A receiver using a 400.0 MHz oscillator may then generate a 100 KHz intermediate frequency from the transmitted signal.

Turning now to Figure 3, a detailed block diagram 300 of the digital section 120 of the BCD 102 is shown. The digital section 120 includes I and Q offset correctors 302 and 304, a digital I/Q downconverter 306, and digital I and Q accumulators 308 and 310. The digital section 120 further includes a wakeup detector 312, a snapshot recorder 314, and a state machine 316. Also shown is a digital frequency synthesizer 370.

The I and Q offset correctors 302 and 304 are designed to remove DC components (produced by any of the circuitry shown in Figure 2) in the digital I and Q outputs 278 and 288. The I offset corrector 302 uses an accumulator constructed with a register 318, a summer 320, and a digital to analog converter 322. The register 318 may, for example, count up when the I analog to digital converter 276 produces a 1 value and may count down when the I analog to digital converter 276 produces a 0 value. Because the I and Q components of the received signal are expected to be periodic in nature (i.e., sine and cosine components), the digital I output 278 is expected to accumulate to 0 (i.e., equal numbers of 1 and 0 values) when there are no DC offsets present. Any DC offset thus accumulates in the register 318, is converted to an analog offset correction by the digital to analog converter 322, and is subtracted from the downconverted I output of the low pass filter 270 by the summer 272 (Figure 2).

The Q offset corrector 304 includes the register 324, the summer 326, and the digital to analog converter 328. The Q offset corrector operates in substantially the same manner as previously described with respect to the I offset corrector 302. The Q offset corrector 304 thereby removes DC offset from the downconverted Q output of the low pass filter 280 using the summer 282. The registers 318 and 324 may, for example, be 10 bits wide.

In an alternative embodiment, the I and Q offset correctors 302 and 304 may be replaced with digital to analog converters connected to the I and Q digital outputs 278 and 288. The output of the digital to analog converters may then be connected to analog integrators (formed, for example, from operational amplifiers). The output of the analog integrators, in turn, are connected to the summers 272 and 282 to remove DC offsets in the I and Q signals.

As noted above, the I and Q analog to digital converters 276 and 286 are preferably 1 bit converters. The discussion below proceeds with respect to the preferred implementation, but may be modified, for example, to use multi-bit analog to digital converters. When multi-bit converters are used, automatic gain control circuits are preferably included to maintain the input signals within an appropriate range for the converters. In the next step in the reception process, the digital I/Q downconverter 306 removes the intermediate frequency from the digital I and Q outputs 278 and 288. The digital I/Q downconverter 306 includes a 16x2 lookup table 330 and a numerically controlled oscillator (NCO) constructed with a register 332 (which may, for example, be 20 bits wide) and summer 334. The downconverter 306 operates under the assumption that the digital I and Q outputs 278 and 288 are carried on a particular intermediate frequency (e.g., 100 KHz). Because the particular intermediate frequency may vary over time, temperature, and signal path conditions, the microprocessor 108 tunes the NCO by adjusting the accumulation value in response to algorithms that determine the actual intermediate frequency.

The two most significant bits of the register 332 are provided as inputs to the 16x2 lookup table 330. Because the register 332 is clocked at a constant frequency, it accumulates (using summer 334) in value and rolls over at a constant frequency. By changing the value added each clock pulse, the register 332 can be tuned to roll over more or less frequently. The most significant bit (MSB) of the register 332 thereby provides a programmable frequency output and the most significant n bits provide a representation of the phase angle of the frequency output.

The two MSBs provided to the 16x2 lookup table provide one of four possible phase angle ranges (quadrants) for the selected intermediate frequency. The two MSBs may therefore follow the desired intermediate frequency carrying the digital I and Q values through each of four quadrants. The 16x2 lookup table 330 may then be indexed according to the quadrant indicated by the MSBs and the sampled I and Q signal values (which will take on constant known values in each quadrant for each bit pattern depending on the modulation technique used).

In Quadrature Phase Shift Keying (QPSK), for example, IQ values are assigned to represent pairs of bits. Thus, 00 may use a phase angle of 45 degrees, 01 may use a phase angle of - 45 degrees, 10 may use a phase angle of 135 degrees, and 11 may use a phase angle of -135 degrees. A transmitted 00 signal value, for example, takes the form of approximately 0.7 A Cos(wt) - 0.7 A Sin(wt) or I Cos(wt) - Q Sin(wt), where A is a constant and wt is the carrier frequency. Thus, even if 00 is transmitted constantly, the I and Q values will vary over positive and negative values as the Sin and Cos terms pass through each of four quadrants. The NCO is matched to the intermediate frequency wt to compensate for the variation caused by the Sin and Cos terms.

Table 1, below, provides the preferred contents of the lookup table 330:

**Table 1**

| NCO MSB, NCO MSB-1 QN, IN | Q-Out | I-Out |
|---|---|---|
| 0000 | 0 | 0 |
| 0001 | 0 | 1 |
| 0010 | 1 | 0 |
| 0011 | 1 | 1 |
| 0100 | 1 | 0 |
| 0101 | 0 | 0 |
| 0110 | 1 | 1 |
| 0111 | 0 | 1 |
| 1000 | 1 | 1 |
| 1001 | 1 | 0 |
| 1010 | 0 | 1 |
| 1011 | 0 | 0 |
| 1100 | 0 | 1 |
| 1101 | 1 | 1 |
| 1110 | 0 | 0 |
| 1111 | 1 | 0 |

The digital I and Q accumulators 308 and 310 follow the 16x2 lookup table 330. The digital I accumulator 308 includes a register 336 and a summer 338. The register 336 thus accumulates I values produced by the 16x2 lookup table 330. Similarly, the digital Q accumulator 310 includes a register 340 and a summer 342 and accumulates Q values. As an example, the digital I and Q accumulators 308 and 310 may accumulate 45 values each, thereby averaging or low pass filtering the I and Q values present in received signals. After 45 values are accumulated, the value of the I and Q registers 336 and 340 are passed on to the wakeup detector 312.

The wakeup detector 312 includes I and Q absolute value circuits 344 and 346, a magnitude approximation circuit 348, and an accumulator (formed by register 350 and summer 352). Additionally, a threshold register 354 and summer 356 are provided. The I and Q absolute value circuits 344 and 346 ensure that only positive I and Q register 336 and 340 magnitudes (for convenience referred to as RI and RQ below) are passed on to the magnitude approximation circuit 348.

Alternatively, the I and Q absolute value circuits 344 and 346 may be eliminated and replaced with inner and outer product calculation circuitry 358, and inner and outer product value accumulators 360 and 362. The calculation circuitry 358 calculates the inner product (A) of successive I and Q samples as A = I(n) * I(n-1) + Q(n)*Q(n-1), and the outer product (B) as B = I(n)*Q(n-1) - I(n-1)*Q(n). Values of A and B are accumulated in accumulators 360 and 362, respectively, and additionally saved in snapshot RAM 364. Future processing on the A and B values saved in the snapshot RAM 364 may include, for example, determination of the frequency of the received signal carrier. The frequency may be approximated by summing ATAN2(A,B) over N A and B values, and dividing the sum by N.

The magnitude approximation circuit 348 calculates an approximation to the magnitude (M) of RI and RQ (when the absolute value circuits 344 and 346 are used) or the magnitude of A and B (when the inner and outer product calculation circuitry 358 is used). The classic formulation of magnitude is M = SQRT(RI*RI + RQ*RQ) (or M = SQRT(A*A + B*B)). A preferred approximation is M = LARGER(RI, RQ) + 1/2(SMALLER(RI, RQ)) or (M = LARGER(A,B) + 1/2(SMALLER(A,B)). Thus, if RI is larger than RQ (or A is larger than B), then M = RI + 1/2 *RQ (or M = A + 1/2 *B).

Values of M are accumulated in the register 350 using the summer 352. When the value in the register 350 exceeds the value stored in the threshold register 354 (as determined by the summer 356), a significant likelihood exists that a meaningful signal has been received (the "detection threshold" has been exceeded). The state machine 316 is therefore informed that the threshold has been exceeded, and the microprocessor 108 may be woken up if in sleep mode. Preferably, a transmitter initially sends a pure sine wave or cosine wave carrier to the BCD 102 before any modulated information. The pure carrier increases the likelihood that the value in register 350 will accumulate to exceed the detection threshold. The detection threshold itself may be set using register 354 to provide an acceptable ratio of false alarms and missed messages for any particular application.

In a preferred embodiment, the output of the magnitude approximation circuit 348 is connected to an accumulator 366, which in turn is connected to a moving average calculator 368. The accumulator 366 preferably keeps a running total of 100 values, and delivers the total every 100 accumulations to the moving average calculator 368. The moving average calculator 368 preferably determines a moving average of the last 10 accumulation values delivered to it by the accumulator 366. The output of the moving average calculator 368 is then compared to determine when the detection threshold have been exceeded.

As noted above in the discussion of the digital I and Q accumulators 308 and 310, the associated registers 336 and 340 accumulate, preferably, 45 samples before passing the register values on to subsequent processing. In addition, two secondary digital I and Q accumulators (not shown) may be provided using the same structure as the accumulators 308 and 310 (namely, a register and a summer). Preferably, the secondary digital I and Q accumulators accumulate 15 samples before being reset to 0. After each 15 sample accumulation of I and Q samples, the accumulated values are stored in a snapshot recorder 314.

In one embodiment of the present invention, the I and Q analog to digital converters 276 and 286 sample at 1.5 MHz and the snapshot recorder stores 2000 I values and 2000 Q values. The snapshot recorder 314 therefore stores a new value for I and a new value for Q at a 100 KHz rate (1,500,00 / 15) and thus stores 20 ms worth of received signal (as represented by accumulated I and Q samples). Because transmitted signal bursts (in one embodiment) are anticipated to be approximately 10 ms long, the snapshot recorder 314 stores enough data to allow the microprocessor 108 to recover the received signal regardless of whether the received signal was detected at its beginning or at its end. Furthermore, the NCO in the digital I/Q demodulator 306 is clocked at 1.5 MHz as well, and the two MSBs of the digital I/Q downconverter register 332 represent the four quadrant phase angles of a 100 KHz frequency signal.

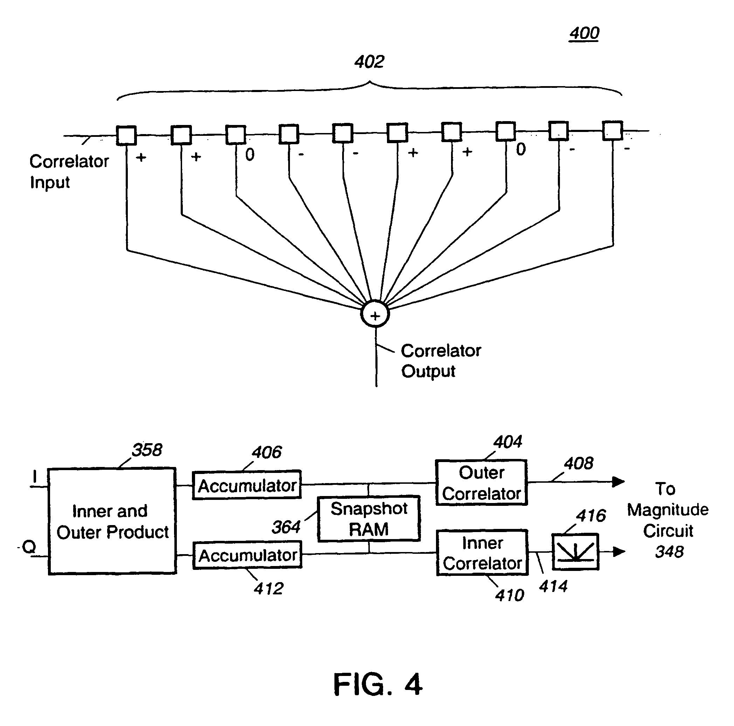

In an alternative embodiment, an FM or FSK signal may be used as a wakeup signal (as opposed to the continuous wave (CW) wakeup signal assumed above) to prevent a pure tone interferer from activating the communication device 100. For example, an FSK signal centered at a particular frequency may be varied plus or minus 6 KHz to provide a wakeup signal. With an FSK wakeup signal (alternating between two frequencies), a correlator such as the one shown in Figure 4 may be used to detect the wakeup signal. The correlator 400 shown in Figure 4 uses 10 taps 402 (each preferably representing 1 millisecond of sample time) assigned to the pattern --0++--0++, where a - indicates a first frequency of the FSK signal, a + represents the second frequency, and a 0 represents a transition between the two frequencies zeroed out to eliminate contribution from noise during the transition.

As shown in Figure 4, separate correlators may be used for the inner product and the outer product. The outer correlator 404, follows the accumulator 406 (preferably providing 1 millisecond samples). The output 408 of the outer correlator 404 may then be connected to the magnitude approximation circuit 348. Similarly, the inner correlator 410 may follow the accumulator 412. The output 414 (after being operated on by the absolute value circuit 416) of the inner correlator 410 may then provided to the magnitude approximation circuit 348.

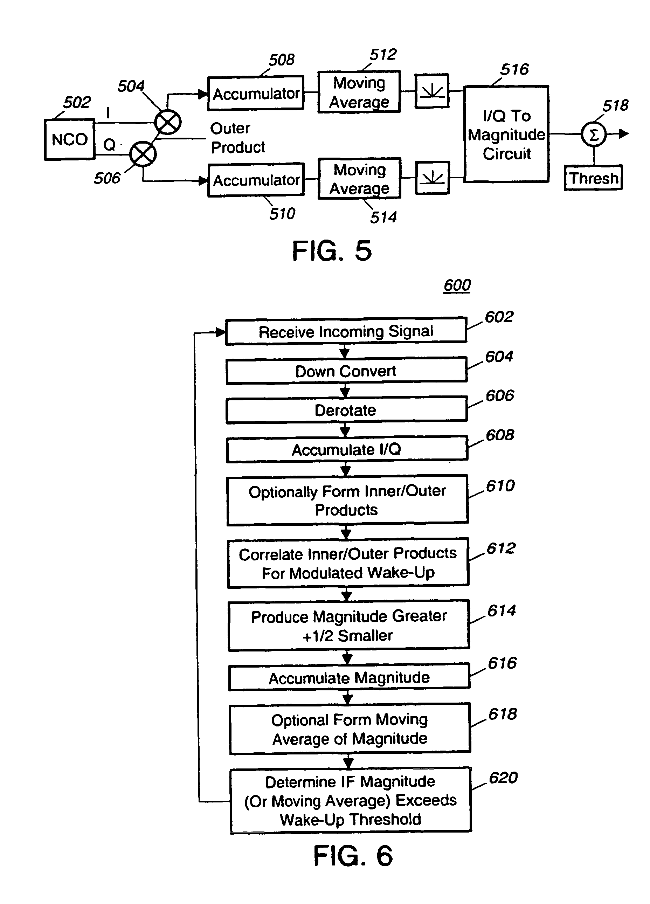

As yet another alternative to detecting an FSK wakeup signal, the outer product output of the calculation circuitry 358 may be examined for oscillation. A suitable detector is shown in Figure 5 and includes the NCO 502, the mixers 504, 506, and the accumulators 508, 510. Also shown are moving average circuits 512, 514, absolute value circuits 520, 522, an I/Q magnitude circuit 516, and a threshold detector 518. In operation, the outer product output of the calculation circuitry 358 is provided to the two mixers 504, 506. The NCO 502 is set to match the expected frequency variation in the output product signal caused by the FSK modulation of the wakeup signal.

The accumulators 508, 510 and the moving average circuits 512, 514 then accumulate and average the resultant I and Q components and provide their absolute value (using the absolute value circuits 520, 522)them to the magnitude circuit 516. The magnitude circuit 516 operates as described above with respect to the magnitude approximation circuit 358. The output of the magnitude circuit 516 is then compared to a threshold by the threshold detector 518 to determine if, in fact, a received signal has passed a wakeup threshold.

As noted above, once a received signal has crossed the detection threshold, the microprocessor 108 may be woken up to process the accumulated I and Q values stored in the snapshot recorder 314. Initially, the microprocessor 108 determines the frequency of the signal stored in the snapshot recorder 314 (for example, by calculating ATAN2(A,B) and averaging, as noted above). The microprocessor then controls the snapshot recorder 314 to capture the next burst (which, in a predefined signaling environment will occur a fixed time later, for example, 90 ms).

Referring still to Figure 3, the frequency synthesizer 370 is shown including a lookup table 372, digital to analog converters 374, 376, and low pass filters 378, 380. In operation, the lookup table 372 accepts (for example) eight bits from the NCO 332 and outputs in response digitized Sine and Cosine values, for example, at six bits of resolution. The Sine and Cosine values are converted to analog and low pass filtered. The resultant signals are provided to the mixer inputs 246 and 254 as part of the upconversion and data transmission process. The NCO 332 may thereby be used to shift the transmit frequency to a desired value and optionally to compensate for a nominal crystal 104 error (or manufacturing tolerances, and the like) by storing these parameters (i.e., a frequency shift code and a frequency correction code) in the memory 122.

The communication device 100 may also optionally include the ability to communicate at different rates. Thus, for example, the communication device 100 may transmit first a relatively fast rate (e.g., 10 Kilobytes per second) wakeup signal followed by substantive information to obtain a rapid response from a receiver. If the communication device 100 is too far from the receiver for reliable communication at the fast rate, the receiver will not successfully decode the transmitted signal and generally will not send a response. The communication device 100 may then resend at a relatively slower rate (e.g., 1 Kilobyte per second). Typically, signal sampling in the communication device 100 occurs at some multiple of the data rate (e.g., 10 times the data rate). Thus, in adapting the snapshot recorder 314 for both transmission rates, the size of the memory may be increased, or the data rate multiple may be decreased while keeping the same memory size. Alternatively, the number of stored bits per sample may be decreased while keeping the same memory size.

Turning now to Figure 6, that figure illustrates a high level flow diagram 600 encompassing the wakeup detection discussed above. At step 602, the communication device receives an incoming signal. The resultant received signal is then downconverted at step 604 and derotated at step 606. The derotated I/Q values are accumulated at step 608 in preparation for determination of wakeup conditions.

At step 610, for example, the inner and outer products of the derotated I/Q values may be formed. The inner and outer products may be used above as described in Figure 3 to detect a continuous wave wakeup signal, or may, in conjunction with the correlation of the inner and outer products (step 612) be used to detect a modulated wakeup signal. At step 614, a magnitude output is produced that is indicative of the presence of a wakeup signal. The magnitude output may be formed from the derotated l/Q values, the inner and outer products, or the correlated inner and outer product values, for example. After accumulation of the magnitudes (step 616), and optionally forming a moving average of the magnitudes (step 618), the communication device may compare against a predetermined threshold to determine whether a wakeup signal has, in fact, been received.

The following algorithms presented in the source code appendix provide an implementation of the signal processing undertaken by the processor 108. The algorithms include frequency and time of arrival estimation (for a CW burst or a burst containing a BPSK timing reference pattern) as well as demodulation and detection of information bits (for a burst containing random BPSK bits).

The algorithms are presented as software routines written in Mathcad programming language (with file names ending in .mcd) and C (with file names ending in .c). The routines are named and described as follows:

| Frequency and Time of Arrival Estimation | |
|---|---|
| CFT.MCD | coarse accuracy frequency and time estimation |
| FF.MCD | fine accuracy frequency estimation |
| FFU.MCD | fine accuracy frequency estimation in the presence of BPSK bits |
| FTF.MCD | fine accuracy timing estimation for the fast data mode |
| FTS.NCD | fine accuracy timing estimation for the slow data mode |

| Demodulation and Detection of the Information Bits | |
|---|---|
| DMF.MCD | BPSK demodulation and detection for the fast data mode |
| DMS.MCD | BPSK demodulation and detection for the slow data mode |

| Supporting Constants, Functions, and Tables | |
|---|---|
| CONST.MCD | basic constants |
| FUNCT.MCD | basic functions |
| TABLE.MCD | basic tables |
| SUM.MCD | summation and derotation functions |
| DERSUM.C | "C" source for creating DERSUM.DLL a User defined function add-on to Mathcad to support SUM.MCD |

| Demonstration Routines | |
|---|---|
| F.MCD | Demonstration of coordinated frequency estimation, time estimation, and high speed data detection for a short range high speed message structure. |
| S.MCD | Demonstration of coordinated frequency estimation, time estimation, and low speed data detection for a longer range lower speed message structure. |

| Support for the Demonstration Routines | |
|---|---|
| SNAP2x.MCD | generation of sample data to represent the output of the A/D |
| ATODPOST.C | "C" source for creating ATODPOST.DLL a User defined functin add-on to Mathcad to support SNAP2X.MCD |

The present bi-directional communication device thus provides a long range, low power communication device with a sophisticated wakeup detector. The wakeup detector allows the communication device to save power, yet still reliably receive, decode, and process substantive communication signals sent after a wakeup signal, as well as the wakeup signal itself. The snapshot memories provide storage for the wakeup signal, in certain embodiments, as well as the substantive communication signals. An associated microprocessor may then examine the contents of the snapshot memories, for example, to perform coarse or fine frequency estimation, or decode and extract useful data.

While particular elements, embodiments and applications of the present invention have been shown and described, it is understood that the invention is not limited thereto since modifications may be made by those skilled in the art, particularly in light of the foregoing teaching.

## Claims

1. A remote keyless entry system communication device (100) for a vehicle, the communication device (100) comprising:
an antenna (114) for transmitting and receiving signals;
an analog section (200) coupled to the antenna (114), the analog section (200) comprising transmit and receive circuitry (202) coupled to the antenna (114), the receive circuitry comprising an intermediate frequency downconverter (204), a digital Inphase output (278), and a digital Quadrature phase output (288); and
a digital section (200) coupled to the digital Inphase output (278) and the digital Quadrature phase output (288), the digital section (200) comprising an I/Q derotater (306) including an I output and a Q output, a wakeup detector (312) including a magnitude circuit (348) including a magnitude output (349) and a threshold comparison circuit (354, 356) coupled to the magnitude output (349), the threshold comparison circuit (354, 356) comparing the magnitude output (349) to a threshold value indicative of a wakeup signal reception condition; and
a microprocessor (108) that is coupled to the digital section (200), the microprocessor (108) having a low power consuming, sleep mode and a normal operating mode, the microprocessor (108), when in the normal operating mode, being responsive to received data for controlling operation of mechanisms associated with the remote keyless entry system,
the digital section (200) further including a state machine (316) that, in response to the threshold comparison circuit (354, 356) determining that the magnitude output (349) exceeds the threshold value, switches the microprocessor (108) from the low power consuming, sleep mode to the normal operating mode.

2. The communication device (100) of claim 1, wherein the wakeup detector (312) further comprises an accumulator (366) coupled to the magnitude output (349) and the threshold comparison circuit (354, 356).

3. The communication of claim 2, wherein the wakeup detector (312) further comprises a moving average circuit between the accumulator (366) and the threshold comparison circuit (354, 356).

4. The communication device (100) of claim 1, wherein the digital section (200) further comprises:
an inner and outer product circuit (358) coupled to the I output and the Q output;
an I accumulator (406) coupled between the inner/outer product circuit (358) and the magnitude circuit (348); and
a Q accumulator (412) coupled between the inner/outer product circuit (358) and the magnitude circuit (348).

5. The communication device (100) of claim 1, wherein the digital section (200) further comprises:
an inner/outer product circuit (358) coupled to the I output and the Q output;
an outer correlator (404) coupled between the inner/outer product circuit (358) and the magnitude circuit (348); and
an inner correlator (410) coupled between the inner/outer product circuit (358) and an absolute value circuit (416), the absolute value circuit (416) being coupled to the magnitude circuit (348).

6. The communication device (100) of claim 5, further comprising an I accumulator (406) coupled between the inner and outer product circuit (358) and the outer correlator (404) and a Q accumulator (412) coupled between the inner and outer product circuit (358) and the inner correlator (410).

7. The communication device (100) of claim 1, wherein the magnitude output (349) carries a value indicative of a larger of an inphase value and quadrature value plus half of a smaller of the inphase and quadrature value.

8. The communication device (100) of claim 1, wherein the analog section (200) further comprises an Inphase analog to digital converter (276) coupled to the intermediate frequency downconverter (204) and the digital Inphase output (278) and a Quadrature phase analog to digital converter (286) coupled to the intermediate frequency downconverter (204) and the digital Quadrature phase output (288).

9. The communication device (100) of claim 1, further comprising:
a transmit amplifier (218) coupled to the antenna (114);
an upconverter (206) coupled to the transmit amplifier (218), the upconverter (206) including an I input and a Q input,
a frequency synthesizer (212) coupled to the I input and the Q input; and
a numerically controlled oscillator (104) coupled to the frequency synthesizer (212).

10. The communication device (100) of claim 9, further comprising:
a microprocessor (108) coupled to the transmit amplifier (218); and
a memory (122) coupled to the microprocessor (108), the memory (122) including a transmit amplifier power level code.

11. The communication device (100) of claim 9, further comprising:
a microprocessor (108) coupled to the transmit amplifier (218); and
a memory (122) coupled to the microprocessor (108), the memory (122) including a frequency shift code for the numerically controlled oscillator (104).

12. The communication device (100) of claim 11, wherein the memory (122) further includes a frequency correction code for the numerically controlled oscillator (104).

13. A method of activating a remote keyless entry system communication device (100) for a vehicle using a continuous wave or modulated wakeup signal, the method comprising:
receiving an incoming signal at an antenna (114) to generate a received signal;
downconverting the received signal to produce a digital I output (278) and a digital Q output (288);
derotating the digital I output (278) and the digital Q output (288) to produce derotated I and Q outputs;
producing a magnitude output (349) associated with the derotated I and Q outputs;
determining when the accumulated magnitude exceeds a predetermined threshold; and switching a microprocessor (108) from a low power consuming, sleep mode to a normal operating mode.

14. The method of claim 13, wherein the step of producing a magnitude output (349) comprises producing a magnitude output (349) corresponding to a larger of two input values plus half of a smaller of the two input values.

15. The method of claim 13, further comprising the step of accumulating the derotated I and Q outputs before the producing step.

16. The method of claim 13, further comprising the step of forming an inner product and an outer product of the derotated I and Q outputs, and wherein the step of producing a magnitude output (349) comprises producing a magnitude output (349) corresponding to larger of the inner and output products plus half of smaller of the inner and outer products.

17. The method of claim 13, further comprising the steps of:
forming an inner product and an outer product of the derotated I and Q outputs; and
generating correlated inner product and correlated outer product values before the producing step.

18. The method of claim 17, further comprising the step of forming the absolute value of the correlated inner product before the producing step.

## Patentansprüche

1. Datenübertragungseinheit (100) eines fernbedienbaren Schlüssellosen-Zugangs-Systems für ein Fahrzeug, wobei die Datenübertragungseinheit (100) umfasst:
eine Antenne (114) zum Senden und Empfangen von Signalen;
einen mit der Antenne (114) gekoppelten analogen Abschnitt (200), wobei der analoge Abschnitt (200) eine mit der Antenne (114) gekoppelte Sende- und Empfangsschaltung (202) aufweist, wobei die Empfangsschaltung einen Zwischenfrequenz-Abwärtswandler (204), eine digitale Inphasen-Ausgabe (278) und eine digitale Quadraturphasen-Ausgabe (288) aufweist; und
einen mit der digitalen Inphasen-Ausgabe (278) und der digitalen Quadraturphasen-Ausgabe gekoppelten digitalen Abschnitt (200), wobei der digitale Abschnitt (200) einen I/Q-Derotator (306) einschließlich einer I-Ausgabe und einer Q-Ausgabe umfasst, sowie einen Weck-Detektor (312) einschließlich einer Betragsgrößen-Schaltung (348) mit einer Betragsgrößen-Ausgabe (349), und eine mit der Betragsgrößen-Ausgabe (349) gekoppelte Schwellwert-Vergleichsschaltung (354, 356), wobei die Schwellwert-Vergleichsschaltung (354, 356) die Betragsgrößen-Ausgabe (349) mit einem Schwellwert vergleicht, der einen Empfangszustand für ein Wecksignal anzeigt; und
einen Mikroprozessor (108), der mit dem digitalen Abschnitt (200) gekoppelt ist, wobei der Mikroprozessor (108) einen Ruhemodus mit geringer Leistungsaufnahme und einen normalen Betriebsmodus hat, wobei der Mikroprozessor (108), wenn er sich im normalen Betriebsmodus befindet, auf empfangene Daten zum Steuern des Betriebs von Mechanismen reagiert, die dem fernbedienbaren Schlüssellosen-Zugangs-System zugeordnet sind,
wobei der digitale Abschnitt (200) weiterhin einen Automaten (316) umfasst, der als Antwort darauf, dass die Schwellwert-Vergleichsschaltung (354, 356) feststellt, dass die Betragsgrößen-Ausgabe (349) den Schwellwert überschreitet, den Mikroprozessor (108) aus dem Ruhemodus mit geringer Leistungsaufnahme in den normalen Betriebsmodus schaltet.

2. Datenübertragungseinheit (100) nach Anspruch 1, wobei der Weck-Detektor (312) weiterhin einen Akkumulator (366) umfasst, der mit der Betragsgrößen-Ausgabe (349) und der Schwellwert-Vergleichsschaltung (354, 356) gekoppelt ist.

3. Datenübertragungseinheit (100) nach Anspruch 2, wobei der Weck-Detektor (312) weiterhin eine Schaltung für gleitenden Mittelwert zwischen dem Akkumulator (366) und der Schwellwert-Vergleichschaltung (354, 356) umfasst.

4. Datenübertragungseinheit (100) nach Anspruch 1, wobei der digitale Abschnitt (200) weiterhin umfasst:
eine Schaltung für ein inneres und ein äußeres Produkt (358), die mit der I-Ausgabe und der Q-Ausgabe gekoppelt ist;
einen I-Akkumulator (406), der zwischen der Schaltung für das innere/äußere Produkt (358) und der Betragsgrößen-Schaltung (348) eingekoppelt ist; und
einen Q-Akkumulator (412), der zwischen der Schaltung für das innere/äußere Produkt (358) und der Betragsgrößen-Schaltung (348) eingekoppelt ist.

5. Datenübertragungseinheit (100) nach Anspruch 1, wobei der digitale Abschnitt (200) weiterhin umfasst:
eine Schaltung für ein inneres/äußeres Produkt (358), die mit der I-Ausgabe und der Q-Ausgabe gekoppelt ist;
einen äußeren Korrelator (404), der zwischen der Schaltung für das innere/äußere Produkt (358) und die Betragsgrößen-Schaltung (348) eingekoppelt ist; und
einen inneren Korrelator (410), der zwischen der Schaltung für das innere/äußere Produkt (358) und einer Absolutwert-Schaltung (416) eingekoppelt ist,
wobei die Absolutwert-Schaltung (416) mit der Betragsgrößen-Schaltung (348) gekoppelt ist.

6. Datenübertragungseinheit (100) nach Anspruch 5, weiterhin umfassend einen I-Akkumulator (406), der zwischen der Schaltung für das innere und äußere Produkt (358) und dem äußeren Korrelator (404) eingekoppelt ist, und einen Q-Akkumulator (412), der zwischen der Schaltung für das innere und äußere Produkt (358) und dem inneren Korrelator (410) eingekoppelt ist.

7. Datenübertragungseinheit (100) nach Anspruch 1, wobei die Betragsgrößen-Ausgabe (349) einen Wert trägt, der einen größeren von Inphasen-Wert und Quadratur-Wert angibt, zuzüglich der Hälfte eines kleineren von Inphasen- und Quadratur-Wert.

8. Datenübertragungseinheit (100) nach Anspruch 1, wobei der analoge Abschnitt (200) weiterhin einen Inphasen-A/D-Wandler (276) umfasst, der mit dem Zwischenfrequenz-Abwärtswandler (204) und der digitalen Inphasen-Ausgabe (278) gekoppelt ist, sowie einen Quadraturphasen-A/D-Wandler (286), der mit dem Zwischenfrequenz-Abwärtswandler (204) und der digitalen Quadraturphasen-Ausgabe (288) gekoppelt ist.

9. Datenübertragungseinheit (100) nach Anspruch 1, weiterhin umfassend:
einen mit der Antenne (114) gekoppelten Übertragungsverstärker (218);
einen mit dem Übertragungsverstärker (218) gekoppelten Aufwärtswandler (206), wobei der Aufwärtswandler (206) eine I-Eingabe und eine Q-Eingabe umfasst,
einen mit der I-Eingabe und der Q-Eingabe gekoppelten Frequenzgenerator (212); und
einen mit dem Frequenzgenerator (212) gekoppelten numerisch gesteuerten Oszillator (104).

10. Datenübertragungseinheit (100) nach Anspruch 9, weiterhin umfassend:
einen mit dem Übertragungsverstärker (218) gekoppelten Mikroprozessor (108); und
einen mit dem Mikroprozessor (108) gekoppelten Speicher (122), wobei der Speicher (122) einen Übertragungsverstärker-Leistungspegel-Code für den Übertragungsverstärker einschliesst.

11. Datenübertragungseinheit (100) nach Anspruch 9, weiterhin umfassend:
einen mit dem Übertragungsverstärker (218) gekoppelten Mikroprozessor (108); und
einen mit dem Mikroprozessor (108) gekoppelten Speicher (122), wobei der Speicher (122) einen Frequenzhub-Code für den numerisch gesteuerten Oszillator (104) einschließt.

12. Datenübertragungseinheit (100) nach Anspruch 11, wobei der Speicher (122) weiterhin einen Frequenzkorrektur-Code für den numerisch gesteuerten Oszillator (104) einschließt.

13. Verfahren zum Aktivieren einer Datenübertragungseinheit (100) eines fernbedienbaren Schlüssellosen-Zugangs-Systems für ein Fahrzeug unter Verwendung einer kontinuierlichen Welle oder eines modulierten Wecksignals, wobei das Verfahren umfasst:
Empfangen eines eingehenden Signals an der Antenne (114), um ein empfangenes Signal zu erzeugen;
Abwärtswandeln des empfangenen Signals, um eine digitale I-Ausgabe (278) und eine digitale Q-Ausgabe (288) zu erzeugen;
Derotieren der digitalen I-Ausgabe (278) und der digitalen Q-Ausgabe (288), um derotierte I- und Q- Ausgaben zu erzeugen;
Erzeugen einer Betragsgrößen-Ausgabe (349), die den derotierten I- und Q-Ausgaben zugeordnet ist;
Bestimmen, wann die akkumulierte Betragsgröße einen vorbestimmten Schwellwert überschreitet; und
Schalten eines Mikroprozessors (108) von einem Ruhemodus mit geringer Leistungsaufnahme in einen normalen Betriebsmodus.

14. Verfahren nach Anspruch 13, wobei der Schritt des Erzeugens einer Betragsgrößen-Ausgabe (349) das Erzeugen einer Betragsgrößen-Ausgabe (349) umfasst, die dem größeren von zwei Eingabewerten, zuzüglich der Hälfte des kleineren der zwei Eingabewerte, zugeordnet ist.

15. Verfahren nach Anspruch 13, das weiterhin den Schritt des Akkumulierens der derotierten I- und Q-Ausgaben vor dem Schritt des Erzeugens umfasst.

16. Verfahren nach Anspruch 13, das weiterhin den Schritt eines Bildens eines inneren und eines äußeren Produkts der derotierten I- und Q-Ausgaben umfasst, und worin der Schritt des Erzeugens einer Betragsgrößen-Ausgabe (349) das Erzeugen einer Betragsgrößen-Ausgabe (349) umfasst, die dem größeren von innerem und äußerem Produkts, zuzüglich der Hälfte des kleineren von innerem und äußerem Produkt, zugeordnet ist.

17. Verfahren nach Anspruch 13, weiterhin umfassen die Schritte:
Bilden eines inneren Produkts und eines äußeren Produkts der derotierten I- und Q-Ausgaben; und
Erzeugen von Werten der korrelierten inneren Produkt- Werte und der korrelierten äußeren Produkt-Werte vor dem Schritt des Erzeugens.

18. Verfahren nach Anspruch 17,'weiterhin umfassend den Schritt des Bildens des Absolutwerts des korrelierten inneren Produkts vor dem Schritt des Erzeugens.

## Revendications

1. Dispositif de communication (100) à système d'entrée à distance sans interrupteur destiné à un véhicule, comprenant :
une antenne (114) destinée à l'émission et à la réception des signaux ;
une section analogique (200) couplée à l'antenne (114), la section analogique (200) comprenant des circuits (202) d'émission et de réception couplés à l'antenne (114), le circuit de réception comprenant un convertisseur abaisseur de fréquence (204) à la fréquence intermédiaire, une sortie numérique en phase (278) et une sortie numérique en quadrature de phase (288) ; et
une section numérique (200) couplée à la sortie numérique en phase (278) et à la sortie numérique en quadrature de phase (288), la section numérique (200) comprenant un dérotateur I/Q (306) comportant une sortie I (en phase) et une sortie Q (en quadrature), un détecteur de réveil (312) comportant un circuit d'amplitude (348) incluant une sortie d'amplitude (349) et un circuit (354, 356) de comparaison de seuil couplé à la sortie d'amplitude (349), le circuit (354, 356) de comparaison de seuil comparant la sortie d'amplitude (349) à une valeur de seuil indicative d'une condition de réception de signal de réveil ; et
un microprocesseur (108) qui est couplé à la section numérique (200), le microprocesseur ayant un mode de veille à faible consommation d'énergie et un mode de fonctionnent normal, le microprocesseur (108), quand il est en mode de fonctionnement normal, étant sensible aux données reçues pour la commande du fonctionnement de mécanismes associés au système d'entrée à distance sans interrupteur ;
la section numérique (200) comprenant en outre une machine à états (316) qui, en réponse au circuit (354, 356) de comparaison de seuil déterminant que la valeur d'amplitude (349) dépasse la valeur de seuil, commute le microprocesseur de l'état de veille à faible consommation d'énergie à l'état normal de fonctionnement.

2. Dispositif de communication (100) selon la revendication 1, dans lequel le détecteur de réveil (312) comprend en outre un accumulateur(366) couplé à la sortie d'amplitude (349) et au circuit (354, 356) de comparaison de seuil.

3. Dispositif de communication (100) selon la revendication 2, dans lequel le détecteur de réveil (312) comprend en outre un circuit de moyenne mobile entre l'accumulateur (366) et le circuit (354, 356) de comparaison de seuil.

4. Dispositif de communication (100) selon la revendication 1, dans lequel la section numérique (200) comprend en outre :
un circuit (358) de produit intérieur et extérieur couplé à la sortie I et à la sortie Q ;
un accumulateur I (406) couplé entre le circuit de produit intérieur/extérieur (358) et le circuit d'amplitude (348) ; et
un accumulateur Q (412) couplé entre le circuit de produit intérieur/extérieur (358) et le circuit d'amplitude (348).

5. Dispositif de communication (100) selon la revendication 1, dans lequel la section numérique (200) comprend en outre :
un circuit (358) de produit intérieur/extérieur couplé à la sortie I et à la sortie Q ;
un corrélateur extérieur (404) couplé entre le circuit de produit intérieur/extérieur (358) et le circuit d'amplitude (348) ; et
un corrélateur intérieur (410) couplé entre le circuit de produit intérieur/extérieur (358) et un circuit (416) de valeur absolue, le circuit (416) de valeur absolue étant couplé au circuit d'amplitude (348).

6. Dispositif de communication (100) selon la revendication 5, comprenant en outre un accumulateur I couplé entre le circuit (358) de produit intérieur et extérieur et le corrélateur extérieur (404) et un accumulateur Q couplé entre le circuit (358) de produit intérieur et extérieur et le corrélateur intérieur (410).

7. Dispositif de communication (100) selon la revendication 1, dans lequel la sortie d'amplitude (349) porte une valeur indicative d'une valeur plus élevée entre une valeur en phase et une valeur en quadrature plus la moitié d'une valeur plus faible entre la valeur en phase et la valeur en quadrature.

8. Dispositif de communication (100) selon la revendication 1, dans lequel la section analogique (200) comprend en outre un convertisseur analogique/numérique en phase (276) couplé au convertisseur abaisseur de fréquence (204) à fréquence intermédiaire et la sortie numérique en phase (278) et le convertisseur analogique/numérique (286) en quadrature de phase couplé au convertisseur abaisseur de fréquence (204) à fréquence intermédiaire et à la sortie numérique en quadrature de phase (288).

9. Dispositif de communication (100) selon la revendication 1, comprenant en outre :
un amplificateur d'émission (218) couplé à l'antenne (114) ;
un convertisseur élévateur (206) couplé à l'amplificateur d'émission (218), le convertisseur élévateur (206) comprenant une entrée I et une entrée Q ;
un synthétiseur de fréquence (212) couplé à l'entrée I et à l'entrée Q ; et
un oscillateur (104) commandé numériquement couplé au synthétiseur de fréquence (212).

10. Dispositif de communication (100) selon la revendication 9, comprenant en outre :
un microprocesseur (108) couplé à l'amplificateur d'émission (218) ; et
une mémoire (122) couplée au microprocesseur (108), la mémoire (122) comprenant un code de niveau de puissance de l'amplificateur d'émission.

11. Dispositif de communication (100) selon la revendication 9, comprenant en outre :
un microprocesseur (108) couplé à l'amplificateur d'émission (218) ; et
une mémoire (122) couplée au microprocesseur, la mémoire (122) comprenant un code de glissement de fréquence pour l'oscillateur (104) commandé numériquement.

12. Dispositif de communication (100) selon la revendication 11, dans lequel la mémoire (122) comprend en outre un code de correction de fréquence pour l'oscillateur (104) commandé numériquement.

13. Procédé d'activation d'un dispositif de communication (100) à système d'entrée à distance sans interrupteur destiné à un véhicule au moyen d'un signal de réveil à ondes continues ou modulées, le procédé comprenant les étapes consistant à :
recevoir un signal incident sur une antenne (114) afin de générer un signal reçu ;
convertir par abaissement le signal reçu afin de produire une sortie numérique I (278) et une sortie numérique Q (288) ;
dérotationner la sortie numérique I (278) et la sortie numérique Q (288) afin de produire des sorties I et Q dérotationnées ;
produire une sortie d'amplitude (349) associée aux sorties I et Q dérotationnées ;
déterminer si l'amplitude accumulée dépasse un seuil prédéterminé ; et
commuter un microprocesseur (108) d'un état de veille à faible consommation d'énergie à un état normal de fonctionnement.

14. Procédé selon la revendication 13, dans lequel l'étape consistant à produire une sortie d'amplitude (349) comprend la production d'une sortie d'amplitude (349) correspondant à une valeur la plus élevée des deux valeurs d'entrée plus la moitié d'une valeur la plus faible des deux valeurs d'entrée.

15. Procédé selon la revendication 13, comprenant en outre l'étape consistant à accumuler les sorties I et Q dérotationnées avant l'étape de production.

16. Procédé selon la revendication 13, comprenant en outre l'étape consistant à former un produit intérieur et un produit extérieur des sorties I et Q dérotationnées, et dans lequel l'étape consistant à produire une sortie d'amplitude (349) comprend la production d'une sortie d'amplitude (349) correspondant à la plus élevée des deux valeurs d'entrée plus la moitié de la plus faible des deux valeurs d'entrée.

17. Procédé selon la revendication 13, comprenant en outre les étapes consistant à :
former un produit intérieur et un produit extérieur des sorties I et Q dérotationnées ; et
générer des valeurs de produit intérieur corrélé et de produit extérieur corrélé avant l'étape de production.

18. Procédé selon la revendication 17, comprenant en outre l'étape consistant à former la valeur absolue du produit intérieur corrélé avant l'étape de production.
